# EUROPEAN PATENT SPECIFICATION

(11) **EP 2 037 626 B1**
(45) Date of publication and mention of the grant of the patent: **18.06.2014**
(21) Application number: 07816893.7
(22) Date of filing: 27.11.2007
(51) Int. Cl.: H04L 12/70, H04L 12/54, H04L 12/24

(54) **BANDWIDTH ADJUSTING METHOD IN BOD TRANSACTION AND APPARATUS THEREOF**
BANDBREITENANPASSUNG IN EINEM VERFAHREN MIT ANGEFORDERTER BANDREITE
PROCÉDÉ D'AJUSTEMENT DE BANDE PASSANTE DANS UNE TRANSACTION DE BANDE PASSANTE À LA DEMANDE ET APPAREIL CORRESPONDANT

(30) Priority: 21.12.2006 CN 200610170248
(43) Date of publication of application: 18.03.2009
(73) Proprietor: Huawei Technologies Co., Ltd., Shenzhen, Guangdong Province 518129 (CN)
(72) Inventor: WU, Zhiping, Guangdong 518129 (CN)
(74) Representative: Thun, Clemens
(86) International application number: PCT/CN2007/003350
(87) International publication number: WO 2008/074211

(56) References cited:
- CN-A- 101 005 405
- JP-A- 2002 319 969
- KR-A- 20050 079 593
- US-A1- 2002 181 504
- US-A1- 2004 196 848
- US-A1- 2005 073 955
- US-A1- 2005 135 435
- US-B1- 7 733 870
- Lyndon Ong, Rajender Razdan, Yalin Wang: "Advanced data services over optical transport networks", spiedigitallibrary.org/proceeding.aspx?art icleid=721429 Proc. SPIE 6022, Network Architectures, Management, and Applications III, 60222H (December 05, 2005, vol. From Conference Volume 6022 6 October 2005 (2005-10-06), pages 1-7, XP002708022, Shanghai, China DOI: 10.1117/12.635234 Retrieved from the Internet: URL:http://proceedings.spiedigitallibrary. org/proceeding.aspx?articleid=721429 [retrieved on 2013-07-31]
- Li Yong ; Shujun Meng ; Jijun Zhao ; Dan Wang ; Sai Liu: "The mechanism to build a kind of OVPN managed concentratively through management plane in ASON", Network Architectures, Management and Applications , vol. 5626 7 November 2004 (2004-11-07), pages 288-299, XP002708023, Beijing, China | DOI: 10.1117/12.570068 Retrieved from the Internet: URL:http://proceedings.spiedigitallibrary. org/proceeding.aspx?articleid=854779 [retrieved on 2013-07-31]
- "User Network Interface (UNI) 1.0 Signaling Specification, Release 2: Common Part", ITU-T DRAFT ; STUDY PERIOD 2001-2004, INTERNATIONAL TELECOMMUNICATION UNION, vol. Study Group 15, 21 January 2004 (2004-01-21), pages 1-70, XP017504585, GENEVA ; CH
- XU W.-Y.: 'Applications Of Multi-Granularity Optical Switching Technology in Automatic Switched Optical Network' OPTICAL COMMUNICATION TECHNOLOGY no. 6, 30 June 2006, pages 40 - 42, XP008101062

## Description

### Field of the Invention

The present invention relates a network communication technology, and in particular, to a method and apparatus for modifying bandwidth in a Bandwidth on Demand (BoD) service.

### Background of the Invention

Traditionally, optical transport networks, including Synchronous Digital Hierarchy (SDH), Synchronous Optical Network (SONET) and Optical Transmission Network (OTN) are designed to transport voice services. However, the rapid growth of data services makes data traffic take a higher and higher proportion in the total traffic that optical networks transport. To meet this trend of rapid growth, the Multi-Service Transport Platform (MSTP) emerges, which can access not only traditional voice services but also data services. The MSTP adapts data services at all rates to SDH transport channels via Generic Framing Procedure (GFP), Link Capacity Adjustment Scheme (LCAS) and Virtual Concatenation (VC) technologies. Also, to meet the needs for higher data transport network bandwidth and shorter service provisioning time, network topologies need to evolve from traditional ring networks to grid networks and network connections need to migrate from static permanent connections to signaling-based soft permanent connections and switched connections. The new optical transport network is called Automatically Switched Optical Network (ASON), which adopts a control plane to set up, modify and maintain network connections and restore connections in the event of network failure. One signaling implementation mode of ASON is Generalized Multi-Protocol Label Switching (GMPLS).

In ASON networks, there are more and more data applications, which embody burst and unpredictability characteristics. The traditional SDH networks are designed for circuit services and not adapted to the features of data services. To implement data services, in the existing ASON networks, Ethernet services are set up by means of Soft Permanent Connection (SPC). Before an Ethernet service is set up, the network management system configures a Virtual Concatenation Group (VCG) statically and maps the Ethernet port of the Ethernet card to the corresponding VCG. Upon reception of an Ethernet service setup request, the network management system first initiates an SPC setup procedure to set up an SDH channel between the source and destination nodes of the Ethernet service according to the bandwidth required by the Ethernet services. Then the network management system adds a Virtual Container (VC) in the established SDH channel into the corresponding VCG. In this way, an SPC based Ethernet service is set up.

However, in the above Ethernet service, the SDH channel is initiated by the network management system and set up by the control plane, and Ethernet client layer connections are entirely configured by the network management system. The control plane has no client layer service information and the entire procedure is mainly controlled by the network management system. Setting up Ethernet services in the Switched Connection (SC) mode is not supported. Modification of service bandwidth cannot be implemented via the User Network Interface (UNI), in other words, a client cannot initiate bandwidth modification according to the change of service traffic.

US 7733870 B1 (LIU STEPHEN S [US] ET AL, 8 June 2010) disclosed systems and methods for providing bandwidth-on-demand telecommunications services over next-generation optical transport network (NG-OTN). One embodiment of a system provide bandwidth-on-demand services includes a NG-OTN having an intelligent control plane (ICP) and NG-OTN capabilities. A next-generation operation support subsystem (NG-OSS) is communicatively coupled to the NG-OTN. The NG-OTN and the NG-OSS are configured to provide the bandwidth-on-demand services.

"Advanced data services over optical transport networks" (Lyndon Ong et al, 5 December 2005) disclosed the enhancements that have been created in SONET/SDH and OTN networks for the efficient transport of Ethernet and other data networking protocols, and the related extensions to control plane protocols that are necessary to allow for the support of multi-layer networking.

"The mechanism to build a kind of OVPN managed concentratively through management plane in ASON" (Li Yong et al, 7 November 2004) disclosed a way of creating the OVPN through the management plane and manages the OVPN with a centralized method in ASON. Though the extension of resource management, signal mechanism and connection control, the architecture of OVPN creation and OVPN maintenance with a centralized method is efficiently realized, and the requirements of multi-granularity, bandwidth modification and link monitory are realized.

US 2004/196848 A1 (WANG SHAOBO [US] ET AL, 7 October 2004) disclosed the improved bandwidth provisioning solution, which includes a client-side application residing on the subscriber's data processing system and a connection-management application residing on a proxy signaling server. The client-side application transmits a subscriber's request for a bandwidth-on-demand session to the connection-management application, which communicates with an asynchronous transfer mode (ATM) edge device using User Network Interface (UNI) signaling to initiate the one or more VCs. When the subscriber no longer desires the additional bandwidth, the supplemental VCs may be terminated.

US 2005/135435 A1 (ISHII YUSUKE [JP] ET AL, 23 June 2005) disclosed that an equipment includes an input traffic collector which collects and retains an input traffic amount of each input port for one period at preset periods; a bandwidth set processor which calculates a bandwidth for use in each input port from the input traffic amount retained in the input traffic collector, and calculates the corresponding number of virtual concatenation member paths from the difference of the bandwidth in use and a virtual concatenation path bandwidth having been allocated to the input port, and issues an addition command or a deletion command for adding or deleting the virtual concatenation member paths for the calculated number; a virtual concatenation controller which sets a virtual concatenation path bandwidth against the traffic input from the plurality of ports; and a link capacity adjustment scheme controller which sets and changes the virtual concatenation to the virtual concatenation controller, based on the addition command or the deletion command of the virtual concatenation member paths issued by the bandwidth set processor.

US 2005/073955 A1 (MACLEAN MARK D [CA] ET AL, 7 April 2005) disclosed a system and method of adaptively managing bandwidth between services contending for the bandwidth on an optical link. Bandwidth is allocated to each service contending for bandwidth of the optical link. For each service, a current utilization metric representing a measure of current usage of the allocated bandwidth by that service is computed. Additional bandwidth is allocated to one of the services in response to the current utilization metric of that service if bandwidth usage of the optical link is currently at less than full capacity, otherwise the bandwidth allocation between the services is balanced in response to the current utilization metric of at least one of the services if the bandwidth usage of the optical link is currently at full capacity.
"User Network Interface (UNI) 1.0 Signaling Specification, Release 2: Common Part" ITU-T Draft (Study Group 15, 21 January 2004) defined the services offered over the UNI, the signaling protocols used for invoking the services, the mechanisms for transporting signaling messages and auto-discovery procedures that aid in signaling.

### Summary of the Invention

Embodiments of the present invention provide a method and apparatus for modifying bandwidth in a Bandwidth on Demand (BoD) service so as to modify bandwidth according to changes of service traffic.

A method for modifying bandwidth in a Bandwidth on Demand (BoD) service includes:
receiving, by a source User Network Interface (UNI) network (UNI-N), the BoD service based bandwidth modification message from a UNI client (UNI-C) via control plane signaling, the bandwidth modification message carrying a bandwidth modification value; wherein the BoD service corresponds to a Virtual Concatenation Group, VCG;
judging, by the source UNI-N,whether an absolute value of the bandwidth modification value is smaller than a Virtual Container 4, VC4, granularity;
modifying, by the source UNI-N, the number of Virtual Container 12, VC12, tunnels in the VCG when the absolute value of the bandwidth modification value is smaller than the VC4 granularity;
determining, by the source UNI-N, whether the bandwidth modification value indicates addition of bandwidth when the absolute value of the bandwidth modification value is larger than or equal to the VC4 granularity;
setting up, by the source UNI-N, one or more VC4 tunnels according to the bandwidth modification value when the bandwidth modification value indicates addition of bandwidth;
deleting, by the source UNI-N, one or more VC4 tunnels according to the bandwidth modification value when the bandwidth modification value indicates reduction of bandwidth;
judging, by the source UNI-N, whether a tunnel setup or deletion message returned is an operation success message; and
modifying, by the source UNI-N, the number of VC12 tunnels in the VCG when the tunnel setup or deletion message returned is an operation success message.

According to embodiments of the invention, a BoD service can be set up automatically and the service bandwidth can be modified according to changes of the service traffic and the lower layer tunnel granularity.

### Brief Description of the Drawings

The accompanying drawings are provided herein to facilitate understanding of the present invention and constitute a part of the application without limiting the present invention. In the accompanying drawings:
Figure 1 shows a signaling procedure where a BoD service is set up according to an embodiment of the present invention;
Figure 2 shows a procedure where the source UNI-N modifies bandwidth according to an embodiment of the present invention;
Figure 3 shows a signaling procedure where bandwidth is modified in a BoD service according to an embodiment of the present invention; and
Figure 4 shows the structure of an apparatus for modifying bandwidth in a BoD service according to an embodiment of the present invention.

### Detailed Description of the Embodiments

To help those skilled in the art understand and implement the present invention, the following describes embodiments of the invention with reference to the accompanying drawings. Here, the exemplary embodiments of the invention and related descriptions are for explanation of the present invention only, instead of limiting the present invention.

In ASON networks, there are more and more data applications, which embody burst and unpredictability characteristics. The traditional SDH networks are designed for circuit services and not adapted to the features of data services. This imposes a new requirement on the ASON networks, that is, the ASON networks are required to modify network connection bandwidths dynamically in real time according to client service traffic. The new service is called Bandwidth on Demand (BoD).

To realize the BoD service, the Generic Framing Procedure (GFP) technology may be first adopted to map data service signals to SDH frame formats so as to implement the generic framing procedure for all types of services accessed to an optical network. Secondly, because SDH channel capacity is discrete while accessed data services are continuous in rate and embody burst characteristics, to provide a flexible mode to organize channel capacity in a transport network so as to better meet the characteristics of data transport, the virtual concatenation technology may be adopted to combine multiple virtual containers (VCs) as one container that keeps the bit sequence integrity to transport all types of granular services. In addition, the Link Capacity Adjustment Scheme (LCAS) technology may be adopted to change the channel capacity in a Virtual Concatenation Group (VCG) so as to increase or decrease the number of VC members for a service without affecting the established services and further realize the dynamic and non-disruptive modification of service bandwidths. The above three key technologies, GFP, VC and LCAS, together with the Generalized Multi-Protocol Label Switching (GMPLS) protocol stack on the control plane of an ASON network, can set up and delete BoD services and achieve non-disruptive bandwidth modification.

A BoD service procedure in embodiments of the invention may be implemented in two steps: firstly, a client sets up a BoD service via the User Network Interface (UNI) on the control plane; secondly, bandwidths are modified in a non-disruptive manner.

A BoD service setup procedure may also include two steps. The first step is to set up lower layer tunnels within the network for client services. For example, the lower layer tunnel is presented as a high-order VC tunnel or a high-order VC concatenation tunnel. The number of tunnels depends on the bandwidth of the client service and may be one or more. The bandwidth granularity of each tunnel is a high-order VC (VC4) or a high-order VC concatenation. Also, one VCG is set for every client service and to guarantee non-disruptive services during bandwidth modification, the LCAS function of VCGs needs be enabled. The second step is to initiate the setup of a client layer service which takes the lower layer tunnel as the service layer after the lower layer tunnel is successfully set up, and configure the client service in the source and destination node of the tunnel with a low-order VC (VC12) granularity. A BoD service established in this way takes a high-order VC as a tunnel within the network without consuming low-order cross-connect resources and also guarantees that the client service has a low-order VC as the minimum granularity, and bandwidth can be modified in the granularity of a low-order VC.

A BoD service modification procedure first determines whether to add or delete related high-order VC tunnels according to the new bandwidth requirement, and then modifies the number of low-order VCs in the client service VCG to meet the actual requirement for bandwidth. In the modification procedure, because of the assurance of LCAS, the service will not suffer transient interruption.

The following describes a BoD service setup procedure in an Ethernet according to an embodiment of the present invention.

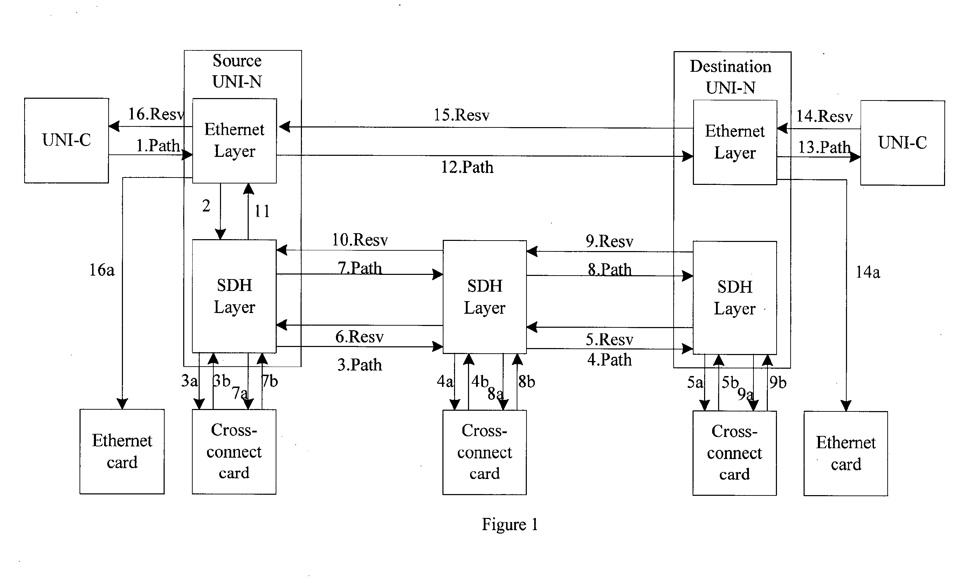

In the BoD service setup procedure, the LCAS function is first enabled for the Ethernet card that requires BoD so as to guarantee non-disruptive services during bandwidth modification. Then, a VCG is assigned to every client service of the Ethernet card. Figure 1 shows a signaling procedure where a BoD service is set up according to an embodiment of the present invention. As shown in Figure 1, a BoD service setup procedure includes the following steps.

Step 1: A UNI client (UNI-C) initiates a BoD service request according to the bandwidth requirement of the current client service and sends an Ethernet service setup signaling message (RSVP Path signaling) to the source UNI network (UNI-N) via the control plane.

Step 2: Upon reception of the Ethernet service request via the UNI interface, the source UNI-N drives the setup of a service layer SDH VC4 tunnel via the control plane.

Steps 3-10: One or more VC4 tunnels are set up according to the bandwidth required by the client services. For example, if the client service requires 100 Mbps, one VC4 tunnel is needed; if the client service requires 300 Mbps, two VC4 tunnels are needed. The signaling procedure shown by 3, 4, 5, 6, 7, 8, 9 and 10 in Figure 1 is a procedure for setting up two VC4 tunnels. Specifically, a lower layer tunnel is set up in steps 3, 4, 5 and 6 and then a second lower layer tunnel is set up in steps 7, 8, 9 and 10. The procedure shown in Figure 1 may also set up multiple VC4 tunnels (not shown in the figure). During the process of setting up a VC4 tunnel, high-order cross-connect resources are configured at the source and destination nodes and intermediate nodes of the tunnel. The signaling procedure indicated by 3a, 3b, 7a, 7b, 4a, 4b, 8a, 8b, 5a, 5b, 9a, and 9b is the procedure for configuring high-order cross-connect resources.

Step 11: A success reply is returned to the client layer after the lower layer tunnels are set up successfully.

Steps 12-16: The source UNI-N initiates a client layer Ethernet service setup request. The client layer Ethernet service takes the lower layer SDH channel as the service layer and its signaling passes through only the source and destination nodes of the tunnel. A VCG configuration command is sent to the Ethernet card from the source and destination nodes of the service so as to configure the appropriate VC12 tunnels to the VCG according to the client service bandwidth. For example, if the client service bandwidth is 100 Mbps, 50 VC12 tunnels should be configured in the VCG; if the client service bandwidth is 300 Mbps, 150 VC12 tunnels should be configured in the VCG, as shown in steps 16a and 14a in Figure 1.

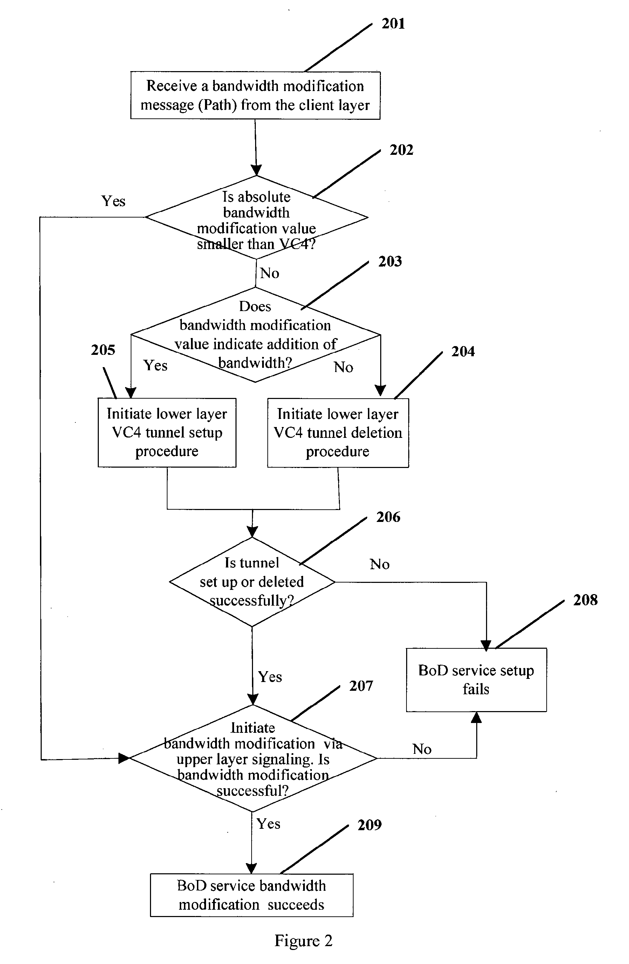

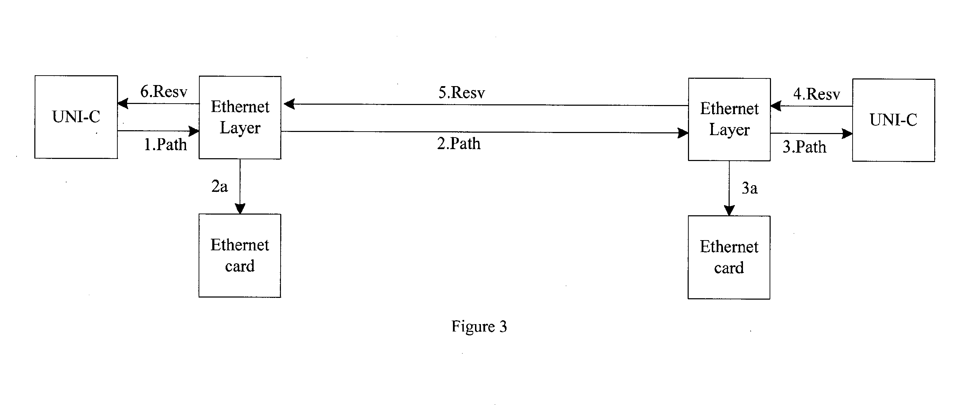

The following describes procedures where bandwidth is modified in a BoD service in an Ethernet according to embodiments of the present invention with reference to Figure 2 and Figure 3. Figure 2 shows a procedure where the source UNI-N modifies bandwidth according to an embodiment of the present invention. Figure 3 shows a signaling procedure where bandwidth is modified in a BoD service according to an embodiment of the present invention.

Step 201: The source UNI-N receives a bandwidth modification request (like the Path message in signaling procedure 1 shown in Figure 3) from a UNI-C via the control plane. The bandwidth modification request carries a bandwidth modification value.

Step 202: Upon reception of the service modification request, the source UNI-N judges whether the absolute bandwidth modification value is smaller than a VC4 granularity. If the absolute bandwidth modification value is smaller than a VC4 granularity, the process proceeds to Step 207; otherwise, the process proceeds to Step 203.

Step 203: If the absolute bandwidth modification value is larger than or equal to a VC4 granularity, the source UNI-N determines whether the bandwidth modification value indicates addition of bandwidth, and if so, the process proceeds to Step 205; otherwise, the process proceeds to Step 204.

Step 204: If the bandwidth modification value indicates reduction of bandwidth, the source UNI-N initiates that a lower layer VC4 tunnel deletion procedure and deletes one or more tunnels as indicated by the bandwidth modification value so that the total bandwidth of tunnels meets the modified bandwidth requirement of the BoD service, and that the waste of tunnel bandwidth resources is reduced. For example, if the bandwidth modification value indicates reduction of one VC4, one VC4 tunnel is deleted; if the bandwidth modification value indicates reduction of two VC4 tunnels, two VCs tunnels are deleted. Afterwards, the source UNI-N returns a tunnel deletion success/failure message and the process proceeds to Step 206.

Step 205: If the bandwidth modification value indicates addition of bandwidth, the source UNI-N initiates a lower layer VC4 tunnel setup procedure and sets up one or more tunnels as indicated by the bandwidth modification value so that the total bandwidth of tunnels meets the modified bandwidth requirement of the BoD service. For example, if the bandwidth modification value indicates addition of one VC4, one VC4 tunnel is set up; if the bandwidth modification value indicates addition of two VC4 tunnels, two VCs tunnels are set up. Afterwards, the source UNI-N returns a tunnel setup success/failure message and the process proceeds to Step 206.

Step 206: It is judged whether the message returned in Step 204 or 205 is an operation success message, and if so, the process proceeds to Step 207; otherwise, the process proceeds to Step 208, which processes the failure of BoD service setup.

Step 207: The source UNI-N initiates a client layer service bandwidth modification procedure. The client layer signaling is sent directly from the source UNI-N to the destination UNI-N. The appropriate VC12 tunnels are configured in the VCG in the source and destination nodes of the tunnel to modify the number of VC12 tunnels in the VCG so as to satisfy the modified bandwidth requirement of the BoD service. For example, if the bandwidth modification value indicates addition of 100 Mbps, 50 VC12 tunnels are configured in the VCG; if the bandwidth modification value indicates addition of 300 Mbps, 150 VC12 tunnels are configured in the VCG; if the bandwidth modification value indicates reduction of 100 Mbps, 50 VC tunnels are deleted from the VCG; if the bandwidth modification value indicates reduction of 300 Mbps, 150 VC tunnels are deleted from the VCG. The bandwidth modification signaling procedure in this scenario is shown in Figure 3, including:

(a) Upon reception of an Ethernet service bandwidth modification request from the client layer via the UNI interface, the source UNI-N initiates a signaling procedure at the Ethernet client layer directly to modify the bandwidth. The destination UNI-N returns a client layer modification success or failure message to the source UNI-N. If the modification succeeds, the process proceeds to Step (b); otherwise, the process proceeds to Step 208 to process the failure of BoD service setup. The signaling procedure is shown in steps 2, 3, 4, 5, and 6 in Figure 3.

(b) Send a command to the Ethernet card from the source and destination nodes of the lower layer tunnel to increase or decrease the number of low-order VCs in the VCG of the Ethernet service according to the modified bandwidth, as shown in steps 2a and 3a in Figure 3.

Step 209: The bandwidth of the BoD service is modified successfully.

It should be noted that, in the foregoing BoD service bandwidth modification procedure, LCAS of the BoD service is enabled before the BoD service is set up. In practice, for bandwidth modification in a BoD service, it is only necessary to enable LCAS of the BoD service before the bandwidth modification. Because LCAS is adopted in the bandwidth modification procedure, the service will not be interrupted during the modification, which means dynamic non-disruptive bandwidth modification.

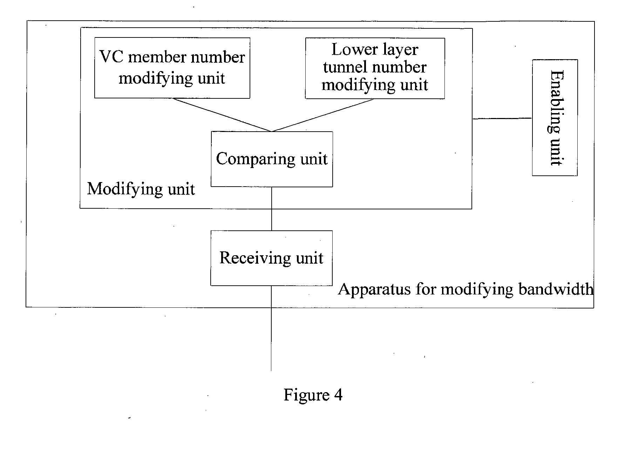

Figure 4 shows an apparatus for dynamic bandwidth modification in a BoD service according to an embodiment of the present invention. The apparatus includes: an enabling unit, adapted to enable the LCAS function of a BoD service; a receiving unit, adapted to receive a bandwidth modification message sent from a UNI-C to a UNI-N via the control plane, the bandwidth modification message carrying a bandwidth modification value; an modifying unit, adapted to modify the bandwidth according to the bandwidth modification value and the lower layer tunnel granularity. The modifying unit further includes: a comparing unit, adapted to compare the absolute bandwidth modification value with the lower layer tunnel granularity and initiate a VC member number modifying unit if the absolute bandwidth modification value is smaller than the lower layer tunnel granularity, or else initiate the VC member number modifying unit and a lower layer tunnel number modifying unit; the VC member number modifying unit, adapted to modify the number of VC members in the VCG; and the lower layer tunnel number modifying unit, adapted to modify the number of lower layer tunnels. For the working principle of the modifying unit, refer to the bandwidth modification procedure of a BoD service in an Ethernet.

Embodiments of the invention are also applicable to Time Division Multiplex (TDM) circuit networks.

According to embodiments of the invention, the GMPLS technology on the control plane and the LCAS, VC and GFP technologies on the transport platform work together to implement the setup of a BoD service and the non-disruptive modification of service bandwidth. In addition, in the procedure of service bandwidth modification, lower layer tunnels are set up or deleted and the number of VCs in the VCG is increased or decreased to achieve bandwidth modification with a VC12 granularity without consuming low-order cross-connect resources of the equipment.

Although the technical scheme of the present invention has been described through exemplary embodiments, the invention is not limited to such embodiments. It is apparent that those skilled in the art can make various modifications and variations to the invention without departing from the scope of the invention. The invention is intended to cover the modifications and variations provided that they fall in the scope of protection defined by the claims.

## Claims

1. A method for modifying bandwidth in a Bandwidth on Demand, BoD, service, comprising:
receiving (201), by a source User Network Interface, UNI, network, UNI-N, the BoD service based bandwidth modification message from a UNI client, UNI-C, via control plane signaling, the bandwidth modification message carrying a bandwidth modification value; wherein the BoD service corresponds to a Virtual Concatenation Group, VCG;
judging (202), by the source UNI-N, whether an absolute value of the bandwidth modification value is smaller than a Virtual Container 4, VC4, granularity;
modifying, by the source UNI-N, the number of Virtual Container 12, VC12, tunnels in the VCG when the absolute value of the bandwidth modification value is smaller than the VC4 granularity;
determining (203), by the source UNI-N, whether the bandwidth modification value indicates addition of bandwidth when the absolute value of the bandwidth modification value is larger than or equal to the VC4 granularity;
setting up (205), by the source UNI-N, one or more VC4 tunnels according to the bandwidth modification value when the bandwidth modification value indicates addition of bandwidth;
deleting (204), by the source UNI-N, one or more VC4 tunnels according to the bandwidth modification value when the bandwidth modification value indicates reduction of bandwidth;
judging (206), by the source UNI-N, whether a tunnel setup or deletion message returned is an operation success message; and
modifying, by the source UNI-N, the number of VC12 tunnels in the VCG when the tunnel setup or deletion message returned is an operation success message.

2. The method of claim 1, wherein the step of modifying the number of VC12 tunnels in the VCG comprises:
increasing, by the source UNI-N, the number of VC12 tunnels in the VCG according to the bandwidth modification value when the bandwidth modification value indicates addition of bandwidth; or
reducing, by the source UNI-N, the number of VC12 tunnels in the VCG according to the bandwidth modification value when the bandwidth modification value indicates reduction of bandwidth.

3. The method of claim 1, further comprising:
setting up, by the source UNI-N, the BoD service before the source UNI-N receives the bandwidth modification message from the UNI-C via control plane signaling.

4. The method of claim 3, wherein the step of setting up the BoD service comprises:
assigning, by the source UNI-N, the Virtual Concatenation Group, VCG, to the BoD service;
enabling, by the source UNI-N, Link Capacity Adjustment Scheme, LCAS, for the VCG;
setting up, by the source UNI- N, a VC4 tunnel; and
configuring, by the source UNI-N, respectively VC12 tunnels to the VCG at source and destination nodes of the VC4 tunnel.

5. The method of claim 4, wherein the step of setting up the VC4 tunnel comprises:
initiating, by the source UNI-C, a BoD service request, which carries a required bandwidth value by the BoD service; and
driving, by the source UNI-N, setup of the VC4 tunnel according to the required bandwidth value via the control plane.

6. The method of claim 1, further comprising:
enabling, by the source UNI-N, Link Capacity Adjustment Scheme, LCAS, for the VCG before the source UNI-N receives the bandwidth modification message from the UNI-C via control plane signaling.

7. A computer program product, **characterized in**, comprising computer program code, which, when executed by a computer unit, will cause the computer unit to perform the steps of any of claims 1-6.

8. A computer readable medium, **characterised in, that** computer program code according to claim 7 is stored on the computer readable medium.

## Patentansprüche

1. Verfahren zum Modifizieren der Bandbreite in einem Bandbreite-auf-Anforderung-Dienst, BoD-Dienst, das Folgendes umfasst:
Empfangen (201) durch ein Quellen-Anwendernetzschnittstellen-Netz, Quellen-UNI-N, der BoD-Dienst-basierenden Bandbreitenmodifikationsnachricht von einem UNI-Client, UNI-C, über Steuerebenensignalisierung, wobei die Bandbreitenmodifikationsnachricht einen Bandbreitenmodifikationswert führt; wobei der BoD-Dienst einer virtuellen Verkettungsgruppe, VCG, entspricht;
Beurteilen (202) durch das Quellen-UNI-N, ob ein absoluter Wert des Bandbreitenmodifikationswerts kleiner ist als eine Granularität eines virtuellen Containers 4, VC4-Granularität;
Modifizieren der Anzahl von Tunneln des virtuellen Containers 12, VC12-Tunneln, in der VCG durch das Quellen-UNI-N, wenn der absolute Wert des Bandbreitenmodifikationswerts kleiner ist als die VC4-Granularität;
Bestimmen (203) durch das Quellen-UNI-N, ob der Bandbreitenmodifikationswert ein Hinzufügen von Bandbreite angibt, wenn der absolute Wert des Bandbreitenmodifikationswerts größer oder gleich der VC4-Granularität ist;
Aufbauen (205) eines oder mehrerer VC4-Tunnel gemäß dem Bandbreitenmodifikationswert durch das Quellen-UNI-N, wenn der Bandbreitenmodifikationswert das Hinzufügen von Brandbreite angibt;
Löschen (204) eines oder mehrerer VC4-Tunnel gemäß dem Bandbreitenmodifikationswert durch das Quellen-UNI-N, wenn der Bandbreitenmodifikationswert das Verringern von Brandbreite angibt;
Beurteilen (206) durch das Quellen-UNI-N, ob eine zurückgegebene Tunnelaufbau- oder Löschungsnachricht eine Erfolgsnachricht der Operation ist; und
Modifizieren der Anzahl von VC12-Tunneln in der VCG durch das Quellen-UNI-N, wenn die zurückgegebene Tunnelaufbau- oder Löschungsnachricht eine Erfolgsnachricht der Operation ist.

2. Verfahren nach Anspruch 1, wobei der Schritt des Modifizierens der Anzahl von VC12-Tunnel in der VCG Folgendes umfasst:
Erhöhen der Anzahl von VC12-Tunneln in der VCG gemäß dem Bandbreitenmodifikationswert durch das Quellen-UNI-N, wenn der Bandbreitenmodifikationswert Hinzufügen von Bandbreite angibt; oder
Verringern der Anzahl von VC12-Tunneln in der VCG gemäß dem Bandbreitenmodifikationswert durch das Quellen-UNI-N, wenn der Bandbreitenmodifikationswert Reduzieren von Bandbreite angibt.

3. Verfahren nach Anspruch 1, das ferner Folgendes umfasst:
Aufbauen des BoD-Dienstes durch das Quellen-UNI-N, bevor das Quellen-UNI-N die Bandbreitenmodifikationsnachricht von dem UNI-C über Steuerebenensignalisierung empfängt.

4. Verfahren nach Anspruch 3, wobei der Schritt des Aufbauens des BoD-Dienstes Folgendes umfasst:
Zuweisen der virtuellen Verkettungsgruppe, VCG, zu dem BoD-Dienst durch das Quellen-UNI-N;
Ermöglichen des Verbindungskapazitätsanpassungsschemas, LCAS, für die VCG durch das Quellen-UNI-N;
Aufbauen eines VC4-Tunnels durch das Quellen-UNI-N; und
Konfigurieren jeweiliger VC12-Tunnel zu der VCG in Quellen- und Zielknoten des VC4-Tunnels durch das Quellen-UNI-N.

5. Verfahren nach Anspruch 4, wobei der Schritt des Aufbauens des VC4-Tunmnels Folgendes umfasst:
Initiieren einer BoD-Dienstanforderung, die einen durch den BoD-Dienst angeforderten Bandbreitenwert führt, durch den Quellen-UNI-C; und
Steuern des Aufbaus des VC4-Tunnels gemäß dem angeforderten Bandbreitenwert über die Steuerebene durch das Quellen-UNI-N.

6. Verfahren nach Anspruch 1, das ferner Folgendes umfasst:
Ermöglichen eines Verbindungskapazitätsanpassungsschemas, LCAS, für die VCG durch das Quellen-UNI-N, bevor das Quellen-UNI-N die Bandbreitenmodifikationsnachricht von dem UNI-C über Steuerebenensignalisierung empfängt.

7. Computerprogrammprodukt, **dadurch gekennzeichnet, dass** es Computerprogrammcode umfasst, der dann, wenn er durch eine Computereinheit ausgeführt wird, bewirkt, dass die Computereinheit die Schritte eines der Ansprüche 1-6 ausführt.

8. Computerlesbares Medium, **dadurch gekennzeichnet, dass** Computerprogrammcode nach Anspruch 7 auf dem computerlesbaren Medium gespeichert ist.

## Revendications

1. Procédé pour modifier une bande passante dans un service de bande passante à la demande, BoD, comprenant les étapes suivantes :
recevoir (201), par un réseau source d'interface réseau utilisateur, UNI, UNI-N, le message de modification de bande passante basé sur un service de BoD d'un client UNI, UNI-C, par l'intermédiaire d'une signalisation de plan de commande, le message de modification de bande passante acheminant une valeur de modification de bande passante ; où le service de BoD correspond à un groupe de concaténation virtuelle, VCG ;
juger (202), par l'UNI-N source, si une valeur absolue de la valeur de modification de bande passante est inférieure à une granularité d'un conteneur virtuel 4, VC4 ;
modifier, par l'UNI-N source, le nombre de tunnels de conteneur virtuel 12, VC12,
dans le VCG lorsque la valeur absolue de la valeur de modification de bande passante est inférieure à la granularité VC4 ;
déterminer (203), par l'UNI-N source, si la valeur de modification de bande passante indique un ajout de bande passante lorsque la valeur absolue de la valeur de modification de bande passante est supérieure ou égale à la granularité VC4 ;
définir (205), par l'UNI-N source, un ou plusieurs tunnels VC4 conformément à la valeur de modification de bande passante lorsque la valeur de modification de bande passante indique un ajout de bande passante ;
supprimer (204), par l'UNI-N source, un ou plusieurs tunnels VC4 conformément à la valeur de modification de bande passante lorsque la valeur de modification de bande passante indique une réduction de la bande passante ;
juger (206), par l'UNI-N source, si un message de définition de tunnel ou de suppression de tunnel retourné est un message de réussite de fonctionnement ; et
modifier, par l'UNI-N source, le nombre de tunnels VC12 dans le VCG lorsque le message de définition de tunnel ou de suppression de tunnel retourné est un message de réussite de fonctionnement.

2. Procédé selon la revendication 1, dans lequel l'étape comprenant de modifier le nombre de tunnels VC12 dans le VCG comprend les étapes suivantes :
augmenter, par l'UNI-N source, le nombre de tunnels VC12 dans le VCG conformément à la valeur de modification de bande passante lorsque la valeur de modification de bande passante indique un ajout de bande passante ; ou
réduire, par l'UNI-N source, le nombre de tunnels VC12 dans le VCG conformément à la valeur de modification de bande passante lorsque la valeur de modification de bande passante indique une réduction de la bande passante.

3. Procédé selon la revendication 1, comprenant en outre l'étape suivante :
définir, par l'UNI-N source, le service de BoD avant que l'UNI-N source ne reçoive le message de modification de bande passante de l'UNI-C par l'intermédiaire d'une signalisation de plan de commande.

4. Procédé selon la revendication 3, dans lequel l'étape comprenant de définir le service de BoD comprend les étapes suivantes :
assigner, par l'UNI-N source, le groupe de concaténation virtuelle, VCG, au service de BoD ;
activer, par l'UNI-N source, un schéma d'ajustement de capacité de liaison, LCAS, pour le VCG ;
définir, par l'UNI-N source, un tunnel VC4 ; et
configurer, respectivement, par l'UNI-N source, des tunnels VC12 vers le VCG au niveau de noeuds de source et de destination du tunnel VC4.

5. Procédé selon la revendication 4, dans lequel l'étape comprenant de définir le tunnel VC4 comprend les étapes suivantes :
initier, par l'UNI-C source, une demande de service de BoD, qui achemine une valeur de bande passante requise par le service de BoD ; et
entraîner, par l'UNI-N source, une configuration du tunnel VC4 conformément à la valeur de bande passante requise par l'intermédiaire du plan de commande.

6. Procédé selon la revendication 1, comprenant en outre l'étape suivante :
activer, par l'UNI-N source, un schéma d'ajustement de capacité de liaison, LCAS, pour le VCG avant que l'UNI-N source reçoive le message de modification de bande passante depuis l'UNI-C par l'intermédiaire d'une signalisation de plan de commande.

7. Produit programme informatique, **caractérisé en ce qu'**il comprend un code de programme informatique qui, lorsqu'il est exécuté par une unité informatique, amènera l'unité informatique à exécuter les étapes de l'une quelconque des revendications 1 à 6.

8. Support lisible par ordinateur, **caractérisé en ce que** le code de programme informatique selon la revendication 7 est stocké sur le support lisible par ordinateur.
